# EUROPÄISCHE PATENTSCHRIFT

(11) **EP 0 322 357 B1**
(45) Veröffentlichungstag und Bekanntmachung des Hinweises auf die Patenterteilung: **18.08.1993**
(21) Anmeldenummer: 88810843.8
(22) Anmeldetag: 07.12.1988
(51) Int. Cl.: C09B 33/18, D06P 1/06, D06P 3/32

(54) **Verfahren zur Herstellung von Polyazofarbstoffen**
Process for the preparation of polyazo dyes
Procédé de préparation de colorants polyazoiques

(30) Priorität: 16.12.1987 CH 4923/87
(43) Veröffentlichungstag der Anmeldung: 28.06.1989
(73) Patentinhaber: CIBA-GEIGY AG, 4002 Basel (CH)
(72) Erfinder: Langfeld, Horst, Dr., D-7889 Grenzach-Wyhlen 1 (DE)

(56) Entgegenhaltungen:
- EP-A- 0 212 412
- DE-A- 2 033 602
- FR-A- 2 163 675
- FR-A- 2 267 349
- US-A- 2 183 673

## Beschreibung

Die Erfindung betrifft ein Verfahren Zur Herstellung von Polyazofarbstoffen sowie die Verwendung der nach dem Verfahren hergestellten Farbstoffe zum Färben von verschiedensten textilen und nicht-textilen Materialien, vor allem von Leder.

Gegenstand der Erfindung ist insbesondere ein Verfahren zur Herstellung von Polyazofarbstoffen, welches dadurch gekennzeichnet ist, dass man
a) eine Verbindung der Formel 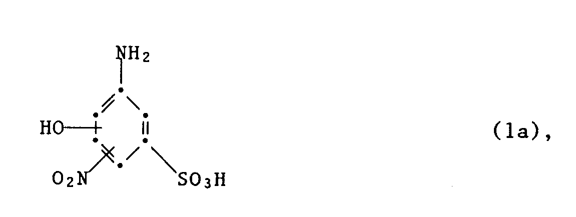 diazotiert und auf eine Verbindung der Formel 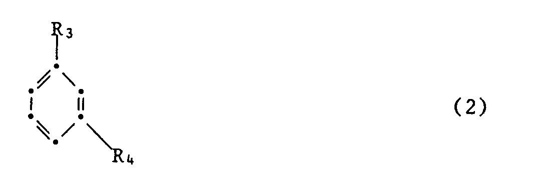 worin R₃ und R₄ unabhängig voneinander Hydroxy oder Amino bedeuten, kuppelt,
b) eine Verbindung der Formel 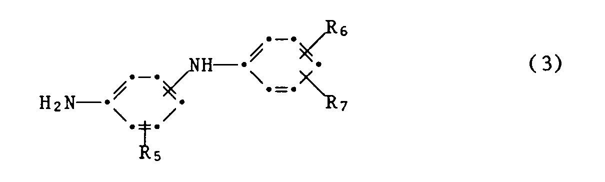 worin R₅ und R₆ unabhängig voneinander Wasserstoff oder Sulfo bedeuten und R₇ Nitro, C₁-C₄-Alkyl, C₁-C₄-Alkoxy oder Halogen ist, diazotiert und auf das gemäss a) erhaltene Produkt kuppelt,
c) eine Verbindung der Formel 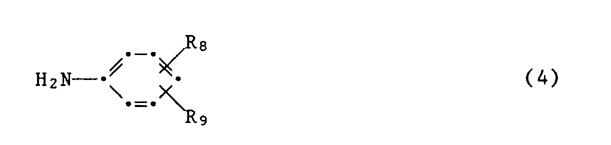 worin R₈ Wasserstoff, C₁-C₄-Alkyl, C₁-C₄-Alkoxy, Halogen, Carboxy oder Sulfo ist und R₉ unabhängig die Bedeutung von R₈ hat oder für Nitro steht, diazotiert und auf das gemäss b) erhaltene Produkt kuppelt,
d) gegebenenfalls eine weitere Verbindung der oben angegebenen Formel (3) diazotiert und auf das gemäss c) erhaltene Produkt kuppelt und
e) gegebenenfalls das gemäss c) oder d) erhaltene Produkt metallisiert.

Eine besonders bevorzugte Ausführungsform der vorliegenden Erfindung betrifft ein Verfahren, worin 2-Amino-6-nitrophenol-4-sulfonsäure oder 2-Amino-4-nitrophenol-6-sulfonsäure in a) diazotiert und auf eine Verbindung der Formel (2) gekuppelt wird.

Geeignete Verbindungen der Formel (2) sind 1,3-Diaminobenzol, 3-Amino-phenol und 1,3-Dihydroxybenzol; bevorzugt ist hierbei die Verwendung von 1,3-Dihydroxybenzol, d.h., R₃ und R₄ in der Formel (2) bedeuten vorzugsweise jeweils Hydroxy.

R₅ in der Formel (3) ist vorzugsweise Wasserstoff und R₆ steht bevorzugt für Sulfo. R₇ hat vorzugsweise die Bedeutung Nitro, Methyl, Methoxy oder Chlor.

Die Verwendung einer Verbindung der Formel 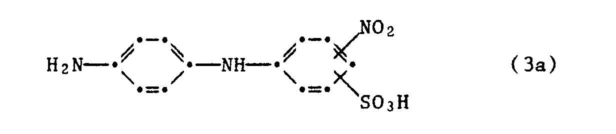
ist in den Verfahrensschritten b) und d) besonders bevorzugt.

In den Verbindungen der Formel (4) hat R₈ vorzugsweise die Bedeutung Wasserstoff, Chlor, Methyl oder Methoxy und R₉ ist vorzugsweise Nitro, Chlor, Methyl, Methoxy oder Wasserstoff.

In einer besonders bevorzugten Ausführungsform des erfindungsgemässen Verfahrens handelt es sich bei der Verbindung der Formel (4) in c) um o-, m- oder insbesondere p-Nitroanilin.

Die Aufarbeitung des gemäss c) bzw. d) erhaltenen Produkts ergibt den metallfreien Polyazofarbstoff. Vorzugsweise wird jedoch das gemäss c) bzw. d) erhaltene Farbstoffgemisch anschliessend z.B. mit einer Eisen-, Kobalt-, Nickel-, Chrom- oder Kupferverbindung metallisiert, wobei sich die entsprechenden 1:1- oder 1:2- Eisen-, Kobalt-, Nickel-, Chrom- oder Kupferkomplexe bilden.

Eine besonders bevorzugte Ausführungsform des erfindungsgemässen Verfahrens betrifft die Metallisierung des gemäss c) bzw. d) erhaltenen Produkts in einem anschliessenden Schritt e) mit einer Kupferverbindung.

Die Diazotierung der Verbindungen der Formel (1a) in a) sowie der Verbindungen der Formeln (3) und (4) in b), c) und d) erfolgen jeweils in an sich bekannter Weise, z.B. mit einem Nitrit, z.B. einem Alkalimetallnitrit wie Natriumnitrit, unter sauren Bedingungen bei Temperaturen von -5 bis 25°C und vorzugsweise 0 bis 10°C.

Die Kupplungsreaktionen a), b), c) und d) werden ebenfalls unter üblichen, an sich bekannten, Bedingungen durchgeführt. Man arbeitet zweckmässig jeweils in wässrigem Medium bei einem leicht sauren, neutralen oder alkalischen pH-Wert und Temperaturen von ca. 0 bis 25°C, vorzugsweise bei 0 - 10°C. Bevorzugt ist für die Kupplungsreaktionen a), b) und c) jeweils ein neutrales oder alkalisches Medium und insbesondere ein leicht alkalisches Medium, d.h. ein Medium, welches einen pH-Wert von 7,5 bis 12 und insbesondere 8 bis 9 aufweist; der pH-Wert kann durch Zugabe von Basen, z.B. Alkalimetallhydroxiden oder -carbonaten, Ammoniak oder einem Amin, eingestellt werden.

Pro Mol Verbindung der Formel (2) setzt man z.B. 0,7 bis 1,5 Mol und vorzugsweise 0,8 bis 1,2 Mol der Verbindung der Formel (1a) in a) ein.

Die in den Schritten b) und d) des erfindungsgemässen Verfahrens verwendete Gesamtmenge an Verbindung der Formel (3) beträgt z.B. 0,7 bis 1,5 Mol und vorzugsweise 0,8 bis 1,2 Mol pro Mol Verbindung der Formel (2), wobei diese entweder vollständig in b) oder jeweils zu bestimmten Teilen in b) und d) eingesetzt wird. Eine bevorzugte Variante des erfindungsgemässen Verfahrens besteht darin, die Gesamtmenge der Verbindung der Formel (3) in b) zum Einsatz zu bringen, womit der Verfahrensschritt d) entfällt. Es ist jedoch besonders bevorzugt, dass nur ein Teil der Gesamtmenge der Verbindung der Formel (3), der mindestens 15 Mol-% betragen muss, in b) und die verbleibende Menge von höchstens 85 Mol-% im Verfahrensschritt d) eingesetzt werden.

Hierbei ist es insbesondere bevorzugt, insgesamt 0,8 bis 1,2 Mol Verbindung der Formel (3) pro Mol Verbindung der Formel (2) in das Verfahren einzusetzen, wovon 15 bis 50 %, vorzugsweise 20 bis 40 % im Schritt b) und die verbleibende Menge, d.h. 85 bis 50 % und bevorzugt 80 bis 60 %, in d) eingesetzt werden.

Pro Mol Verbindung der Formel (2) setzt man z.B. 0,5 bis 1,5 Mol und vorzugsweise 0,65 bis 1,2 Mol Verbindung der Formel (4) im Verfahrensschritt c) ein.

Die Metallisierung des gemäss c) bzw. d) erhaltenen Produktes erfolgt in an sich bekannter Weise, z.B. in wässrigem Milieu bei Temperaturen von 10 bis 100°C, vorzugsweise 20 - 50°C unter Normaldruck bei einem pH-Wert von 3 bis 12, vorzugsweise 4 bis 9.

Als metallabgebende Mittel kommen z.B. Eisen-(II)- oder Eisen-(III)-chlorid, -sulfat oder -nitrat; Kobaltacetat, -sulfat oder -chlorid; Nickelacetat, -formiat, -sulfat oder -chlorid; Chromfluorid, -sulfat, -acetat, -formiat oder -salicylat; oder Kupfercarbonat, -chlorid, -sulfat oder -acetat in Frage.

Bevorzugt ist die Verwendung von Kupfer-abgebenden Mitteln als Metallisierungsmittel und hierbei insbesondere die Verwendung von Kupfersulfat.

Eine bevorzugte Ausführungsform des erfindungsgemässen Verfahrens ist dadurch gekennzeichnet, dass man
a) 0,8 bis 1,2 Mol-Aequivalente einer Verbindung der oben angegebenen Formel (1a) diazotiert und bei einem pH-Wert von 8,0 bis 9,0 auf 1 Mol-Aequivalent 1,3-Dihydroxybenzol kuppelt,
b) 0,8 bis 1,2 Mol-Aequivalente einer Verbindung der oben angegebenen Formel (3a) diazotiert und auf das gemäss a) erhaltene Produkt kuppelt,
c) die Diazoverbindung aus 0,65 bis 1,2 Mol- Aequivalenten einer Verbindung der zuvor angegebenen Formel (4), worin R₈ Wasserstoff, Chlor, Methyl oder Methoxy ist und R₉ unabhängig die Bedeutung von R₈ hat oder für Nitro steht, auf das gemäss b) erhaltene Produkt kuppelt und gegebenenfalls das gemäss c) erhaltene Produkt mit einer Kupferverbindung metallisiert.

Eine besonders bevorzugte Ausführungsform des erfindungsgemässen Verfahrens zur Herstellung von Polyazofarbstoffen ist dadurch gekennzeichnet, dass man
a) 0,8 bis 1,2 Mol-Aequivalente einer Verbindung der oben angegebenen Formel (1a) diazotiert und bei einem pH-Wert von 8,0 bis 9,0 auf 1 Mol-Aequivalent 1,3-Dihydroxybenzol kuppelt,
b) eine diazotierte Verbindung der oben angegebenen Formel (3a) auf das gemäss a) erhaltene Produkt kuppelt,
c) die Diazoverbindung aus 0,65, bis 1,2 Mol-Aequivalenten einer Verbindung der zuvor angegebenen Formel (4), worin R₈ Wasserstoff, Chlor, Methyl oder Methoxy ist und R₉ unabhängig die Bedeutung von R₈ hat oder für Nitro steht, auf das gemäss b) erhaltene Produkt kuppelt,
d) eine weitere diazotierte Verbindung der Formel (3a) auf das gemäss c) erhaltene Produkt kuppelt, und gegebenenfalls
e) das gemäss d) erhaltene Produkt mit einer Kupferverbindung metallisiert,
wobei die Gesamtmenge der in b) und d) eingesetzten Verbindung der Formel (3a) 0,8 bis 1,2 Mol-Aequivalente beträgt und 20 bis 40 % davon im Verfahrensschritt b) und die verbleibenden 80 bis 60 % im Verfahrensschritt d) eingesetzt werden.

Die nach den obigen Verfahren erhältlichen Polyazofarbstoffe, die ein komplexes Gemisch verschiedener Komponenten darstellen, werden in Form ihrer Salze, insbesonder Alkali-, vor allem Natrium- oder Kaliumsalze, oder Ammoniumsalze oder Salze von organischen Aminen mit positiv geladenem Stickstoffatom isoliert.

Die nach dem erfindungsgemässen Verfahren erhältlichen Farbstoffe stellen gut wasserlösliche anionische Farbstoffe dar, die allgemein für das Färben von mit anionischen Farbstoffen anfärbbaren textilen und nicht textilen Substraten, z.B. für das Färben von Fasermaterial aus natürlicher oder regenerierter Cellulose, natürlichen oder synthetischen Polyamiden, Polyurethanen oder basisch modifizierten Polyolefinen, ferner von anodisiertem Aluminium oder von Leder und Pelzen, geeignet sind.

Die mittels des Verfahrens erhältlichen Farbstoffe können vorteilhaft z.B. zum Färben von Cellulosevliesstoffen, Holz und Papier eingesetzt werden. Als Fasermaterialien kommen insbesondere Baumwolle und natürliche Polyamide wie Wolle und Seide in Betracht, während bei den synthetischen Fasermaterialien Nylon und basisch modifiziertes Polypropylen im Vordergrund stehen.

Die erfindungsgemäss erhaltenen Polyazofarbstoffe eignen sich bevorzugt zum Färben von Pelzen und insbesondere von Leder, wobei alle Arten von Narben- und Veloursledern, z.B. Chromleder, nachgegerbetes Leder oder Veloursleder von Ziege, Schaf, Rind und Schwein, geeignet sind.

Man erhält vorwiegend braune Färbungen mit guten Allgemein-Echtheiten, z.B. Licht-, Wasser-, Wasch-, Schweiss-, Trockenreinigungs-, Säure-, Alkali-, Lösungsmittel- und Diffusionsechtheit gegenüber Weich-PVC. Die erfindungsgemässen Farbstoffe sind farbstark und decken gut; sie weisen ein gutes Ziehvermögen sowie eine gute Beständigkeit gegenüber Elektrolyten wie Natrium- oder Calciumionen sowie gegenüber Chromsalzen auf und besitzen darüberhinaus ein gutes Aufbauvermögen auf Reinchromleder wie auf nachgegerbtem Leder. Besondere Erwähnung verdient die vergleichsweise sehr gute Wasserlöslichkeit der erfindungsgemäss erhaltenen Farbstoffe.

Die DE-A-2033602 und die FR-A-2267349 betreffen jeweils Disazofarbstoffe, bei denen sich jeweils mindestens eine Disazokomponente von einer Aminonaphtholsulfonsäure ableitet, während bei den Trisazofarbstoffen gemäss der vorliegenden Patentanmeldung diese Disazokomponente von einer Aminophenolsulfonsäure abgeleitet ist.

Die US-A-2183673 betrifft zwar Trisazofarbstoffe, die Reihenfolge der Kupplungen im nächstliegenden Beispiel 1 von D1 ist jedoch verschieden von der Reihenfolge der Kupplungen in der vorliegenden Erfindung.

Die nachfolgenden Beispiele dienen der Erläuterung der Erfindung, ohne sie darauf zu beschränken. Teile bedeuten Gewichtsteile und Prozente Gewichtsprozente.

Beispiel 1: 18,8 Teile 2-Amino-6-nitrophenol-4-sulfonsäure werden in an sich bekannter Weise in einem sauren Medium mit Natriumnitrit diazotiert und anschliessend unter Rühren in eine Lösung von 9,6 Teilen 1,3-Dihy droxybenzol in 175 Teilen Wasser und 15 Teilen Soda calc. bei 0 - 5°C eingetragen; dabei wird der pH-Wert durch Zugabe von Natriumhydroxidlösung leicht alkalisch (pH 8,0 - 9,0) gehalten. Nach Beendigung der Kupplung wird die Diazoverbindung aus 9 Teilen 4′-Amino-4-nitrodiphenylamin-2-sulfonsäure zugegeben und der pH-Wert bei dieser 2. Kupplung durch Zugabe von Natriumhydroxidlösung wiederum leicht alkalisch gehalten. In die Lösung des entstandenen Disazofarbstoffes wird die Diazoverbindung aus 11 Teilen 4-Nitroanilin zufliessen gelassen, wobei das Reaktionsmedium durch Zugabe von Natriumhydroxidlösung leicht alkalisch gehalten wird. Nach Beendigung der 3. Kupplung wird die Diazoverbindung aus weiteren 20,6 Teilen 4′-Amino-4-nitrodiphenylamin-2-sulfonsäure zugegeben und das Reaktionsmedium mit Natriumhydroxid wiederum leicht alkalisch gehalten. Nach beendeter 4. Kupplung wird die entstandene Farbstoffsuspension auf 20°C erwärmt und mit Salzsäure auf einen leicht sauren pH-Wert eingestellt. Anschliessend wird eine wässrige Lösung enthaltend 27 Teile Kupfer-(II)-sulfat zufliessen gelassen und 2 Stunden weitergerührt. Anschliessend wird der Farbstoff mit einem Gemisch aus Kaliumchlorid und Natriumchlorid ausgesalzen, filtriert und getrocknet. Das erhaltene dunkle Pulver färbt Leder in einer braunen Nuance mit guten Allgemeinechtheiten.

Beispiel 2: Verfährt man wie im Beispiel 1 angegeben, setzt jedoch im 2. Kupplungsschritt die Gesamtmenge von 29,6 Teilen 4′-Amino-4-nitrodiphenylamin-2-sulfonsäure ein und lässt den 4. Kupplungsschritt entfallen, erhält man einen Farbstoff, der Leder in einem rotbraunen Farbton mit guten Allgemeinechtheiten färbt.

Beispiel 3: Verfährt man wie im Beispiel 1 oder 2 beschrieben, lässt jedoch den Metallisierungsschritt weg und arbeitet das Reaktionsgemisch direkt nach der letzten Kupplung auf, erhält man ebenfalls Farbstoffe, die Leder in einem braunen Farbton mit guten Allgemeinechtheiten färben.

Beispiel 4: Man verfährt wie im Beispiel 1 beschrieben, stellt jedoch die nach der 4. Kupplung erhaltene Suspension des Trisazofarbstoffgemisches mit Salzsäure neutral, erwärmt das Ganze auf 50°C und trägt innerhalb von ca. 20 Minuten 25,5 Teile Eisen-(III)-chlorid ein. Anschliessend wird ein leicht saurer pH-Wert (ca. 3-5) mittels Zugabe von 30 %iger Natriumhydroxidlösung eingestellt, das Reaktionsgemisch auf ca. 95°C erhitzt und etwa 1 Stunde bei dieser Temperatur gehalten. Nach dem Abkühlen wird der Farbstoff, bei dem es sich um den Eisenkomplex des Farbstoffs gemäss Beispiel 1 handelt, in üblicher Weise ausgesalzen, abfiltriert und getrocknet. Er färbt Leder in einer braunen Nuance mit guten Allgemeinechtheiten.

### Färbevorschrift für Leder

100 Teile Bekleidungsveloursleder werden bei 50°C in einer Lösung von 1000 Teilen Wasser und 2 Teilen 24%igem Ammoniak während 2 Stunden aufgewalkt und anschliessend bei 60°C in einer Lösung von 1000 Teilen Wasser, 2 Teilen 24%igem Ammoniak und 3 Teilen Farbstoff gemäss dem Beispiel 1 während 1 Stunde gefärbt. Hierauf gibt man eine Lösung von 40 Teilen Wasser und 4 Teilen 85%iger Ameisensäure zu und färbt noch weitere 30 Minuten. Dann werden die Leder gut gespült und gegebenenfalls noch mit 2 Teilen eines Dicyandiamid-Formaldehydkondensationsproduktes während 30 Minuten bei 50°C behandelt. Man erhält eine braune Färbung mit guten Echtheiten.

## Patentansprüche

1. Verfahren zur Herstellung von Polyazofarbstoffen, dadurch gekennzeichnet, dass man
a) eine Verbindung der Formel 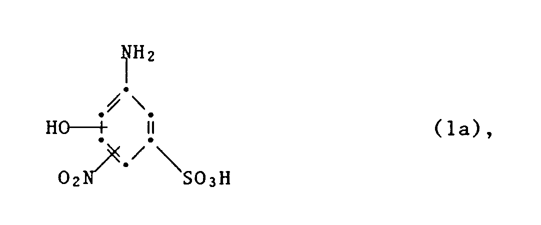 diazotiert und auf eine Verbindung der Formel 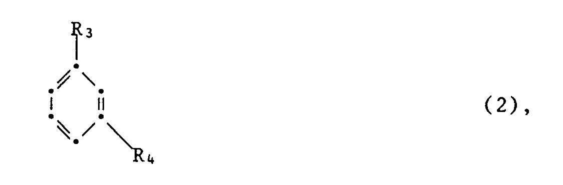 worin R₃ und R₄ unabhängig voneinander Hydroxy oder Amino bedeuten, kuppelt,
b) eine Verbindung der Formel 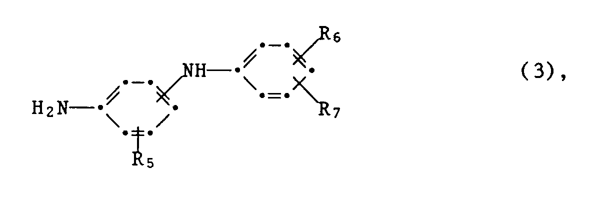 worin R₅ und R₆ unabhängig voneinander Wasserstoff oder Sulfo bedeuten und R₇ Nitro, C₁-C₄-Alkyl, C₁-C₄-Alkoxy oder Halogen ist, diazotiert und auf das gemäss a) erhaltene Produkt kuppelt,
c) eine Verbindung der Formel 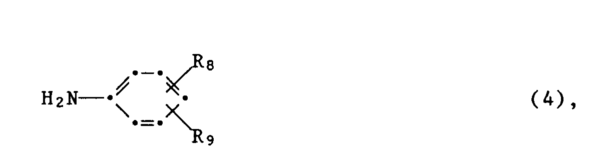 worin R₈ Wasserstoff, C₁-C₄-Alkyl, C₁-C₄-Alkoxy, Halogen, Carboxy oder Sulfo ist und R₉ unabhängig die Bedeutung von R₈ hat oder für Nitro steht, diazotiert und auf das gemäss b) erhaltene Produkt kuppelt,
d) gegebenenfalls eine weitere Verbindung der oben angegebenen Formel (3) diazotiert und auf das gemäss c) erhaltene Produkt kuppelt und
e) gegebenenfalls das gemäss c) oder d) erhaltene Produkt metallisiert.

2. Verfahren gemäss Anspruch 1, dadurch gekennzeichnet, dass R₃ und R₄ in der Formel (2) jeweils Hydroxy bedeuten.

3. Verfahren gemäss einem der Ansprüche 1 oder 2, dadurch gekennzeichnet, dass man in der Verfahrensschritten b) und d) eine Verbindung der Formel 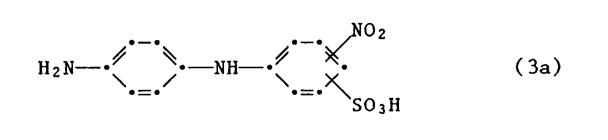 einsetzt.

4. Verfahren gemäss einem der Ansprüche 1 bis 3, dadurch gekennzeichnet, dass R₈ Wasserstoff, Chlor, Methyl oder Methoxy ist und R₉ unabhängig die Bedeutung von R₈ hat oder für Nitro steht.

5. Verfahren gemäss einem der Ansprüche 1 bis 4, dadurch gekennzeichnet, dass man o-, m- oder insbesondere p-Nitroanilin als Verbindung der Formel (4) in c) einsetzt.

6. Verfahren gemäss einem der Ansprüche 1 bis 5, dadurch gekennzeichnet, dass man das gemäss c) oder d) erhaltene Produkt mit einer Kupferverbindung metallisiert.

7. Verfahren gemäss einem der Ansprüche 1 bis 6, dadurch gekennzeichnet, dass man die Kupplungsreaktion a) bei einem pH-Wert von 8,0 bis 9,0 durchführt.

8. Verfahren gemäss einem der Ansprüche 1 bis 7, dadurch gekennzeichnet, dass man pro Mol Verbindung der Formel (2) 0,7 bis 1,5 Mol Verbindung der Formel (1a) in a), 0,5 bis 1,5 Mol Verbindung der Formel (4) in c) und insgesamt 0,7 bis 1,5 Mol Verbindung der Formel (3) in b) und d) zusammen einsetzt, wobei mindestens 15 Mol-% der verwendeten Gesamtmenge der Verbindung der Formel (3) im Verfahrensschritt b) und die gegebenenfalls verbleibende Menge in d) eingesetzt werden.

9. Verfahren gemäss Anspruch 8, dadurch gekennzeichnet, dass man die Gesamtmenge an Verbindung der Formel (3) in b) einsetzt und den Verfahrensschritt d) entfallen lässt.

10. Verfahren gemäss Anspruch 9, dadurch gekennzeichnet, dass die Gesamtmenge der in den Verfahrensschritten b) und d) verwendeten Verbindung der Formel (3) 0,8 bis 1,2 Mol pro Mol Verbindung der Formel (2) beträgt und 20 bis 40 % davon in b) und die verbleibende Menge von 80 bis 60 % in d) eingesetzt werden.

11. Verfahren zur Herstellung von Polyazofarbstoffen, dadurch gekennzeichnet, dass man
a) 0,8 bis 1,2 Mol-Aequivalente einer Verbindung der im Anspruch 1 angegebenen Formel (1a) diazotiert und bei einem pH-Wert von 8,0 bis 9,0 auf 1 Mol-Aequivalent 1,3-Dihydroxybenzol kuppelt,
b) 0,8 bis 1,2 Mol-Aequivalente einer Verbindung der im Anspruch 3 angegebenen Formel (3a) diazotiert und auf das gemäss a) erhaltene Produkt kuppelt,
c) die Diazoverbindung aus 0,65 bis 1,2 Mol-Aequivalenten einer Verbindung der im Anspruch 1 angegebenen Formel (4), worin R₈ Wasserstoff, Chlor, Methyl oder Methoxy ist und R₉ unabhängig die Bedeutung von R₈ hat oder für Nitro steht, auf das gemäss b) erhaltene Produkt kuppelt, und das gemäss c) erhaltene Produkt mit einer Kupferverbindung metallisiert.

12. Verfahren gemäss Anspruch 11, dadurch gekennzeichnet, dass man den Metallisierungsschritt weglässt.

13. Verfahren zur Herstellung von Polyazofarbstoffen, dadurch gekennzeichnet, dass man
a) 0,8 bis 1,2 Mol-Aequivalente einer Verbindung der im Anspruch 1 angegebenen Formel (1a) diazotiert und bei einem pH-Wert von 8,0 bis 9,0 auf 1 Mol-Aequivalent 1,3-Dihydroxybenzol kuppelt,
b) eine diazotierte Verbindung der im Anspruch 3 angegebenen Formel (3a) auf das gemäss a) erhaltene Produkt kuppelt,
c) die Diazoverbindung aus 0,65 bis 1,2 Mol-Aequivalenten einer Verbindung der im Anspruch 1 angegebenen Formel (4), worin R₈ Wasserstoff, Chlor, Methyl oder Methoxy ist und R₉ unabhängig die Bedeutung von R₈ hat oder für Nitro steht, auf das gemäss b) erhaltene Produkt kuppelt,
d) eine weitere diazotierte Verbindung der Formel (3a) auf das gemäss c) erhaltene Produkt kuppelt, und
e) das gemäss d) erhaltene Produkt mit einer Kupferverbindung metallisiert,
wobei die Gesamtmenge der in b) und d) eingesetzten Verbindung der Formel (3a) 0,8 bis 1,2 Mol-Aequivalente beträgt und 20 bis 40 % davon im Verfahrensschritt b) und die verbleibenden 80 bis 60 % im Verfahrensschritt d) eingesetzt werden.

14. Verfahren gemäss Anspruch 13, dadurch gekennzeichnet, dass man den Metallisierungsschritt e) weglässt.

15. Verfahren gemäss einem der Ansprüche 11 bis 14, dadurch gekennzeichnet, dass es sich bei der Verbindung der Formel (4) in c) um o-, m- oder p-Nitroanilin handelt.

16. Verwendung der nach dem Verfahren gemäss den Ansprüchen 1 bis 15 erhältlichen Polyazofarbstoffe zum Färben von verschiedensten textilen und nicht-textilen Materialien und insbesondere zum Färben von Leder.

## Claims

1. A process for the preparation of polyazo dyes, which comprises
a) diazotizing a compound of the formula 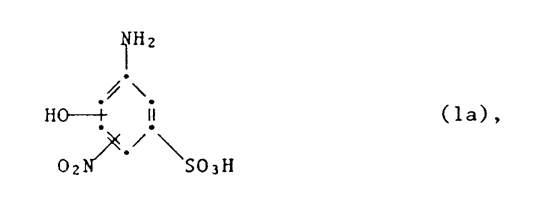 and coupling the product onto a compound of the formula 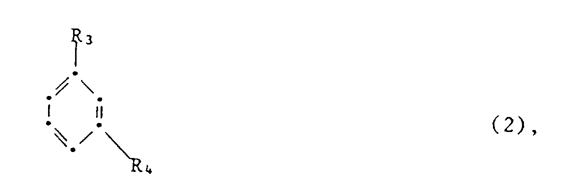 in which R₃ and R₄, independently of one another, are hydroxyl or amino,
b) diazotizing a compound of formula 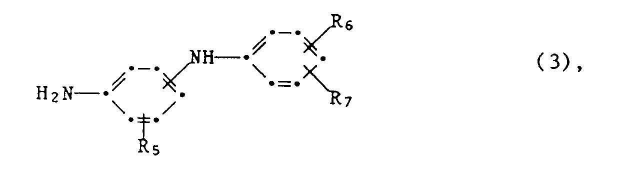 in which R₅ and R₆, independently of one another, are hydrogen or sulfo and R₇ is nitro, C₁-C₄alkyl, C₁-C₄alkoxy or halogen and coupling the product onto the product obtained according to a),
c) diazotizing a compound of the formula 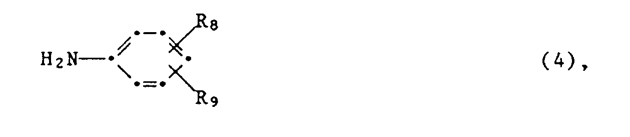 in which R₈ is hydrogen, C₁-C₄alkyl, C₁-C₄alkoxy, halogen, carboxy or sulfo and R₉ independently has the meaning of R₈ or is nitro and coupling the product onto the product obtained according to b),
d) diazotizing, if desired, a further compound of the abovementioned formula (3) and coupling the product onto the product obtained according to c) and
e) metallizing, if desired, the product obtained according to c) or d).

2. A process according to claim 1, wherein R₃ and R₄ in formula (2) are each hydroxyl.

3. A process according to one of claims 1 and 2, wherein in process steps b) and d) a compound of the formula 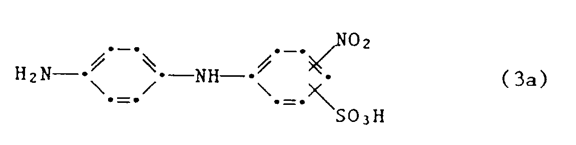 is used.

4. A process according to one of claims 1 to 3, wherein R₈ is hydrogen, chlorine, methyl or methoxy and R₉ independently has the meaning of R₈ or is nitro.

5. A process according to one of claims 1 to 4, wherein o-, m- or, in particular, p-nitroaniline is used in c) as compound of the formula (4).

6. A process according to one of claims 1 to 5, wherein the product obtained according to c) or d) is metallized by means of a copper compound.

7. A process according to one of claims 1 to 6, wherein the coupling reaction a) is carried out at a pH of 8.0 to 9.0.

8. A process according to one of claims 1 to 7, wherein per mole of the compound of the formula (2), 0.7 to 1.5 mol of the compound of the formula (1a) in a), 0.5 to 1.5 mol of the compound of the formula (4) in c) and a total of 0.7 to 1.5 mol of the compound of the formula (3) in b) and d) together are used, at least 15 mol% of the total amount used of the compound of the formula (3) being used in process step b) and any remaining amount being used in d).

9. A process according to claim 8, wherein the total amount of the compound of the formula (3) is used in b) and process step d) is omitted.

10. A process according to claim 9, wherein the total amount of the compound of the formula (3) used in process steps b) and d) is 0.8 to 1.2 mol per mole of the compound of the formula (2) and 20 to 40% thereof are used in b) and the remaining amount of 80 to 60% used in d).

11. Process for the preparation of polyazo dyes, which comprises
a) diazotizing 0.8 to 1.2 mole equivalents of a compound of the formula (1a) given in claim 1 and coupling the product at a pH of 8.0 to 9.0 onto 1 mole equivalent of 1,3-dihydroxybenzene,
b) diazotizing 0.8 to 1.2 mole equivalents of a compound of the formula (3a) given in claim 3 and coupling the product onto the product obtained according to a),
c) coupling the diazo compound from 0.65 to 1.2 mole equivalents of a compound of the formula (4) given in claim 1 in which R₈ is hydrogen, chlorine, methyl or methoxy and R₉ independently has the meaning of R₈ or is nitro onto the product obtained according to b) and metallizing the product obtained according to c) by means of a copper compound.

12. A process according to claim 11, wherein the metallization step is omitted.

13. A process for the preparation of polyazo dyes, which comprises
a) diazotizing 0.8 to 1.2 mole equivalents of a compound of the formula (1a) given in claim 1 and coupling the product at a pH of 8.0 to 9.0 onto 1 mole equivalent of 1,3-dihydroxybenzene,
b) coupling the diazotized compound of the formula (3a) given in claim 3 onto the product obtained according to a),
c) coupling the diazo compound obtained from 0.65 to 1.2 mole equivalents of a compound of the formula (4) given in claim 1 in which R₈ is hydrogen, chlorine, methyl or methoxy and R₉ independently has the meaning of R₈ or is nitro onto the product obtained according to b),
d) coupling a further diazotized compound of the formula (3a) onto the product obtained according to c) and
e) metallizing the product obtained according to d) by means of a copper compound,
the total amount of the compound of the formula (3a) used in b) and d) being 0.8 to 1.2 mole equivalents and 20 to 40% thereof being used in process step b) and the remaining 80 to 60% in process step d).

14. A process according to claim 13, wherein the metallization step e) is omitted.

15. A process according to one of claims 11 to 14, wherein the compound of the formula (4) in c) is o-, m- or p-nitroaniline.

16. Use of the polyazo dyes obtainable by the process according to claims 1 to 15 for dyeing a wide range of textile and non-textile materials and, in particular, for dyeing leather.

## Revendications

1. Procédé de préparation de colorants polyazoïques, caractérisé en ce que :
a) on diazote un composé de formule : 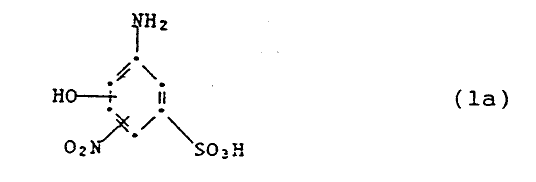 et on copule le dérivé diazo avec un composé de formule : 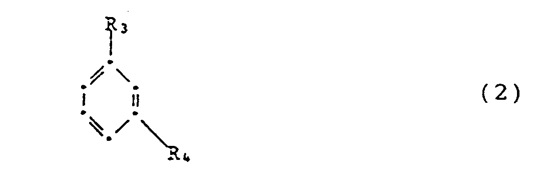 dans laquelle R₃ et R₄ représentent chacun, indépendamment l'un de l'autre, un groupe hydroxy ou un groupe amino,
b) on diazote un composé de formule : 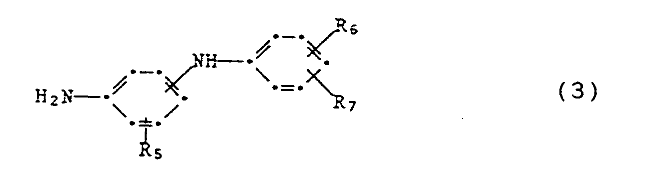 dans laquelle R₅ et R₆ représentent chacun, indépendamment l'un de l'autre, un atome d'hydrogène ou un groupe sulfo, et R₇ représente un atome d'halogène ou un groupe nitro, alkyle en C₁-C₄ ou alcoxy en C₁-C₄, et on copule le dérivé diazo obtenu avec le produit obtenu selon a),
c) on diazote un composé de formule : 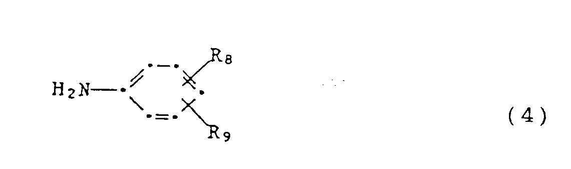 dans laquelle R₈ représente un atome d'hydrogène ou d'halogène, ou un groupe alkyle en C₁-C₄, alcoxy en C₁-C₄, carboxy ou sulfo, et R₉ a les mêmes significations que R₈, indépendamment de ce dernier, ou représente un groupe nitro, et on copule le dérivé diazo obtenu avec le produit obtenu selon b),
d) éventuellement, on diazote un autre composé de formule (3) indiquée précédemment et on copule le dérivé diazo obtenu avec le produit obtenu selon c), et
e) éventuellement, on métalle le produit obtenu selon c) ou d).

2. Procédé selon la revendication 1, caractérisé en ce que, dans la formule (2), R₃ et R₄ représentent chacun un groupe hydroxy.

3. Procédé selon la revendication 1 ou 2, caractérisé en ce que l'on utilise dans les étapes de procédé b) et d) un composé de formule :

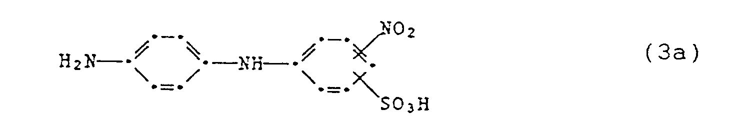

4. Procédé selon l'une quelconque des revendications 1 à 3, caractérisé en ce que R₈ représente un atome d'hydrogène ou de chlore ou un groupe méthyle ou méthoxy, et R₉ a les mêmes significations que R₈, indépendamment de ce dernier, ou représente un groupe nitro.

5. Procédé selon l'une quelconque des revendications 1 à 4, caractérisé en ce que l'on utilise, comme composé de formule (4) dans l'étape c), l'ortho-nitroaniline, la méta-nitroaniline ou en particulier la para-nitroaniline.

6. Procédé selon l'une quelconque des revendications 1 à 5, caractérisé en ce que l'on métalle le produit obtenu selon c) ou d) avec un dérivé du cuivre.

7. Procédé selon l'une quelconque des revendications 1 à 6, caractérisé en ce que l'on réalise la réaction de copulation de l'étape a) à un pH de 8,0 à 9,0.

8. Procédé selon l'une quelconque des revendications 1 à 7, caractérisé en ce que l'on utilise, par mode de composé de formule (2), 0,7 à 1,5 moles de composé de formule (1a) dans l'étape a), 0,5 à 1,5 modes de composé de formule (4) dans l'étape c) et au total 0,7 à 1,5 modes de composé de formule (3) dans l'ensemble des étapes b) et d), au moins 15 % en modes de la quantité totale utilisée du composé de formule (3) étant utilisés dans l'étape de procédé b) et la quantité éventuellement restante étant utilisée dans l'étape d).

9. Procédé selon la revendication 8, caractérisé en ce que l'on utilise la quantité totale du composé de formule (3) dans l'étape b) et en ce que l'étape de procédé d) est supprimée.

10. Procédé selon la revendication 8, caractérisé en ce que la quantité totale du composé de formule (3) utilisé dans des étapes de procédé b) et d) s'élève à 0,8 à 1,2 modes par mode du composé de formule (2), 20 à 40 % de cette quantité totale étant utilisés dans l'étape b) et la quantité restante, de 80 à 60 %, étant utilisée dans d'étape d).

11. Procédé de préparation de colorants polyazoïques, caractérisé en ce que :
a) on diazote 0,8 à 1,2 équivalents en modes d'un composé répondant à la formule (1a) indiquée à la revendication 1, et on copule de dérivé diazo, à un pH de 8,0 à 9,0, avec 1 équivalent en modes de 1,3-dihydroxybenzène,
b) on diazote 0,8 à 1,2 équivalents en modes d'un composé répondant à la formule (3a) indiquée à la revendication 3, et on copule le dérivé diazo obtenu avec le produit obtenu selon a),
c) on copule le dérivé diazo provenant de 0,65 à 1,2 équivalents en modes d'un composé répondant à la formule (4) indiquée à la revendication 1, dans laquelle R₈ représente un atome d'hydrogène ou de chlore ou un groupe méthyle ou méthoxy, et R₉ a les mêmes significations que R₈, indépendamment de ce dernier, ou représente un groupe nitro, avec de produit obtenu selon b), et on métalle le produit obtenu selon c) avec un dérivé du cuivre.

12. Procédé selon la revendication 11, caractérisé en ce que l'on omet l'étape de métallation.

13. Procédé de préparation de colorants polyazoïques, caractérisé en ce que :
a) on diazote 0,8 à 1,2 équivalents en modes d'un composé répondant à la formule (1a) indiquée à la revendication 1, et on copule le dérivé diazo, à un pH de 8,0 à 9,0, avec 1 équivalent en modes de 1,3-dihydroxybenzène,
b) on copule le dérivé diazo d'un composé répondant à la formule (3a) indiquée à la revendication 3, avec le produit obtenu selon a),
c) on copule de dérivé diazo provenant de 0,65 à 1,2 équivalents en modes d'un composé répondant à la formule (4) indiquée à la revendication 1, dans laquelle R₈ représente un atome d'hydrogène ou de chlore ou un groupe méthyle ou méthoxy et R₉ a les mêmes significations que R₈, indépendamment de ce dernier, ou représente un groupe nitro, avec le produit obtenu selon b),
d) on copule un autre composé de formule (3a), diazoté, avec de produit obtenu selon c), et
e) on métalle le produit obtenu selon d) avec un dérivé du cuivre,
la quantité totale du composé de formule (3a) utilisé dans les étapes b) et d) s'élevant à 0,8 à 1,2 équivalents en moles, et 20 à 40 % de cette quantité totale étant utilisés dans l'étape de procédé b) et les 80 à 60 % restants étant utilisés dans l'étape de procédé d).

14. Procédé selon la revendication 13, caractérisé en ce que l'on omet l'étape de métallation e).

15. Procédé selon l'une quelconque des revendications 11 à 14, caractérisé en ce que le composé de formule (4) de l'étape c) est l'ortho-nitroaniline, la méta-nitroaniline ou la para-nitroaniline.

16. Utilisation des colorants polyazoïques que l'on peut obtenir par le procédé selon les revendications 1 à 15, pour la teinture de matières textiles et de matières non textiles très diverses, et en particulier pour la teinture du cuir.
